# EUROPÄISCHE PATENTSCHRIFT

(11) **EP 1 548 341 B1**
(45) Veröffentlichungstag und Bekanntmachung des Hinweises auf die Patenterteilung: **16.04.2008**
(21) Anmeldenummer: 04029662.6
(22) Anmeldetag: 15.12.2004
(51) Int. Cl.: F16K 29/00, F16K 31/06

(54) **Ventil und Verfahren zum Herstellen eines Ventils**
Valve and method for its production
Soupape et procédé de production

(30) Priorität: 19.12.2003 DE 10360706
(43) Veröffentlichungstag der Anmeldung: 29.06.2005
(73) Patentinhaber: AWECO APPLIANCE SYSTEMS GmbH & Co. KG, 88099 Neukirch (DE)
(72) Erfinder: Ott, Hubert, 88212 Ravensburg (DE)
(74) Vertreter: Eisele, Otten, Roth & Dobler

(56) Entgegenhaltungen:
- EP-A- 1 128 109
- WO-A-03/071175
- FR-A- 2 363 044
- US-A- 3 191 277
- US-A- 3 736 640
- US-A- 5 107 890

## Beschreibung

Die Erfindung betrifft ein Verfahren zum Herstellen eines Ventils nach Anspruch 1.

Derzeit sind im Handel unterschiedlichste Ventile erhältlich. So existieren z.B. elektromagnetische, insbesondere bistabile Ventile, die in vielfältigen Anwendungen eingesetzt werden, beispielsweise in Fluidkreisläufen von Haushaltsgeräten wie Kühlschränke oder zur Dampfentspannung für Getränkemaschinen wie z.B. Kaffeemaschinen, aber auch in anderen Gebieten wie auf dem Gebiet der Analytik oder der Messtechnik.

In den meisten Anwendungsbereichen wie u.a. dem Anwendungsbereich der Haushaltsgeräte, werden hierbei Ventile bevorzugt, die eine kompakte Bauweise aufweisen und darüber hinaus mit möglichst wenig Aufwand herzustellen und zu montieren sind. Um diesem Zweck gerecht zu werden, sind bereits verschiedene Entwicklungen bekannt geworden (vgl. DE 199 14 972 A1 oder WO 03/071 176 A1).

Bekannte Ventile weisen unter anderem einen Ventilsitz auf, der zur Gewährleistung der Funktion des Ventils durch den Ventilkörper abzudichten ist. Beispielsweise bei Kugelventilen wird dementsprechend ein sphärischer Ventilsitz benötigt. Zum Abdichten des Ventilsitzes kann z.B. eine Elastomerdichtung oder dergleichen eingesetzt werden.

Darüber hinaus sind auch metallische Dichtungen bei bestimmten Anwendungen im Einsatz. Die Verwendung entsprechend metallischer, sphärischer Dichtsitze erfordert eine sehr genaue und schmutzfreie Fertigung bzw. Montage des Ventils. Häufig werden entsprechende Ventilsitze, insbesondere bei Ventilen mit Ankern, nach dem Drehen gehärtet, wobei ein gewisser Härteverzug entsteht. Zum Teil wird bei bestimmten Ventilen der den Ventilsitz umfassende Polschuh nach dem Härten mit Kupfer oder dergleichen belegt, so dass eine anschließende Verlötung des Polschuhs vorteilhaft realisierbar ist. Auch bei dieser Verkupferung können Ungenauigkeiten bezüglich der Form des Ventilsitzes entstehen, die zur Undichtigkeit des Ventiles im Betrieb führen können.

Darüber hinaus können sowohl bei der Herstellung:des Ventilsitzes als auch bei der Montage des Ventils Schmutzpartikel den Ventilsitz verunreinigen, was wiederum zu einer Undichtigkeit des Ventilsitzes im Betrieb führen kann.

Zudem sind aus den Druckschriften US 3,736,640 oder EP 1 128 109 oder FR A 2 363 044 oder US 5, 107, 890 Herstellungsverfahren für Ventilsitze mittels einem Prägevorgang beziehungsweise einem Prägeelement bekannt.

Gegenüber diesem Stand der Technik hat die vorliegende Erfindungen die Aufgabe, die Dichtwirkung bei geprägten Ventilsitzen weiter zu verbessern.

Diese Aufgabe wird, ausgehend von einem Verfahren der einleitend genannten Art, durch die kennzeichnenden Merkmale des Anspruchs 1 gelöst. Durch die in den Unteransprüchen genannten Maßnahmen sind vorteilhafte Ausführungen und Weiterbildungen der Erfindung möglich.
Dementsprechend zeichnet sich ein erfindungsgemäßes Herstellungsverfahren dadurch aus, ein Verfahren zum Herstellen eines Ventils insbesondere für Kühlmittelkreisläufe, wobei ein Ventilsitz eines Ventilsitzelementes oder eines Dichtelemente für einen Ventilkörper erzeugt wird, wobei wenigstens eine Dichtfläche des Ventilsitzelementes oder des Dichtelementes mittels eines Prägeelementes durch Prägen einer Prägefläche geformt wird und wobei wenigstens ein zu prägender Überstand des Ventilsitzelementes oder des Dichtelementes erzeugt wird.

Mit Hilfe eines entsprechend vorteilhaften Prägevorgangs kann eine nahezu beliebig geformte, insbesondere dreidimensional ausgebildete Dichtfläche mit sehr hoher Genauigkeit hergestellt werden. Eine entsprechend hohe Genauigkeit gewährleistet ein besonders dichtes Verschließen des Ventilsitzes durch den Ventilkörper, was die Betriebssicherheit des Ventils wesentlich erhöht.

Weiterhin stellt das Prägen ein formgebendes, spanloses Verfahren dar, das die Gefahr des Verschmutzens des Ventilsitzes bei dessen Herstellung im Vergleich zum Stand der Technik wesentlich verringert. Zudem kann durch die beim Prägen einhergehende Kaltverformung eine gewisse Verfestigung des Materials im Bereich der Dichtfläche bewirkt werden, was sich positiv auf die Lebensdauer des Ventils auswirkt. Darüber hinaus können.mit Hilfe des Prägevorganges Maßungenauigkeiten vorangegangener Fertigungsschritte, wie z.B. des Drehens, ausgeglichen bzw. beseitigt werden.

Erfindungsgemäß wird vor dem Prägevorgang wenigstens eine die Prägefläche umfassende Ausnehmung insbesondere in dem Ventilsitzelement erzeugt. In einer besonderen Weiterbildung der Erfindung wird die Ausnehmung als eine Durch Drehverfahren erzeugte Ausnehmung des Ventilsitzelementes ausgebildet. Eine entsprechend hergestellte Ausnehmung des Ventilsitzelementes kann wirtschaftlich besonders günstig gemäß der Erfindung hergestellt werden. Hierbei ist insbesondere eine vergleichsweise geringe Maßgenauigkeit der Ausnehmung dadurch möglich, dass die endgültige Formgebung durch das erfindungsgemäße Prägen mit hoher Maßgenauigkeit anschließend hergestellt wird.

Gemäß der Erfindung wird die Ausnehmung wenigstens teilweise in der Form des Ventilkörpers ausgebildet. Hierdurch wird bei einem vergleichsweise geringen, zu verformenden Prägevolumen, d.h. dem durch die Prägung zu verformenden Materialvolumen, eine vergleichsweise große Dichtfläche erzeugbar. Eine entsprechend große Dichtfläche führt zu einer besonders guten Abdichtung des Ventilsitzes durch den Ventilkörper, was die Betriebssicherheit des Ventils erhöht. Weiterhin kann die Ausnehmung gemäß dieser Variante der Erfindung eine gewisse Führungsfunktion für den Ventilkörper beim Betrieb des Ventils übernehmen.

Vorteilhafterweise wird bei der Herstellung der Ausnehmung wenigstens der zu prägender Überstand des Ventilsitzelementes erzeugt. Beispielsweise weist die Ausformung der Ausnehmung ein Differenzvolumen zur Form des Ventilkörpers auf, das im Wesentlichen den Überstand bildet. Durch den Prägevorgang wird dieses Differenzvolumen, soweit es dem Überstand ungefähr entspricht, beseitigt, wobei in vorteilhafter Weise die erfindungsgemäße Dichtfläche generiert wird.

Vorzugsweise wird die Ausformung bei einem sphärischen Ventilsitz wenigstens bereichsweise mit einem etwas größere Radius als dem Radius des Ventilkörpers versehen. Bei der Differenz der Radien kann insbesondere eine Anpassung bzw. Berücksichtigung der Maßungenauigkeit der Fertigung der Ausnehmung vorgenommen werden.

Vorteilhafterweise wird der Überstand als Ringsteg ausgebildet. Ein entsprechender Ringsteg ist beispielsweise mit Hilfe spanender Verfahren, z.B. durch Drehen oder dergleichen besonders einfach herstellbar.

Wie bereits oben angeführt, wird die Ausnehmung und/oder der Überstand vorzugsweise wenigstens teilweise mit formenden und/oder spanenden Verfahren gefertigt. Vor allem bei kreisrunden Ventilsitzen sind die bereits erwähnten Drehverfahren besonders von Vorteil.

Vorzugsweise wird ein Prägeelement verwendet, dessen Form der Form des Ventilkörpers wenigstens teilweise entspricht. Hierdurch können Nachbearbeitungen der Dichtflächen weitestgehend entbehrlich werden. Beispielsweise kann der den Ventilsitz prägende Abschnitt des Prägeelementes entsprechend der gewünschten Form des Ventilsitzes konisch bzw. kegelförmig und/oder sphärisch ausgebildet werden. Gerade entsprechend dreidimensional ausgebildete Ventilsitze sind beispielsweise durch das erfindungsgemäße Prägeverfahren bei hohen Stückzahlen besonders wirtschaftlich herstellbar.

In einer besonderen Ausführungsform wird ein bezüglich dem den Ventilsitz aufweisenden Bauelement, im Folgenden Ventilsitzelement genannt, separates Dichtelement zum Abdichten des Ventilsitzes verwendet, das die Prägefläche, d.h. die zu prägende Fläche bzw. die durch das Prägen erzeugte Dichtfläche umfasst. Gegebenenfalls kann dieses Element als Hülse oder dergleichen in das Ventilsitzelement mit Hilfe einer entsprechenden Ausnehmung eingelassen werden.

Vorzugsweise wird die Dichtfläche jedoch wenigstens teilsweise in das Ventilsitzelement unmittelbar eingeformt. Hierdurch wird gegenüber der zuvor genannten Variante eine Reduzierung der Anzahl der verwendeten Bauelemente erreicht, wodurch sich der Herstellungsaufwand reduziert.

Vorteilhafterweise wird vor der Prägung ein Vorsprung vorgesehen, der die Prägefläche umfasst. Hierbei kann der Vorsprung sowohl ein separates Element oder ein hervorstehender Teil des Ventilsitzelementes seien. Der Vorsprung wird durch den Prägevorgang im Allgemeinen wenigstens teilweise derart verformt, dass die Ausdehnung des Vorsprungs reduziert oder weitgehend beseitigt wird.

Vorzugsweise wird wenigstens eine Prägelehre mit mindestens einem Anschlag zum Anschlagen am Dichtelement und/oder Ventilsitzelement verwendet. Vorteilhafterweise wird das Prägeelement beim Prägen zwischen der Prägelehre sowie dem Dichtelement und/oder dem Ventilsitzelement angeordnet. Mit Hilfe eines entsprechenden Prägeelementes ist eine besonders hohe Maßgenauigkeit vor allem bei Massenfertigung vorteilhaft zu verwirklichen. Darüber hinaus wird durch die mittels dem Prägeelement erreichbare hohe Genauigkeit der Lage der Dichtfläche bzw. des Ventilsitzes, insbesondere in Richtung des Ventilkörperhubes bzw. der Ventilachse betrachtet, eine besonders hohe Genauigkeit u.a. der Hublänge des Ventilkörpers im Betrieb erreicht. Eine hohe Genauigkeit des Ventilkörperhubes ist für die Betriebssicherheit des Ventils von besonderer Bedeutung.

Weiterhin kann durch das Prägeelement beispielsweise die Lage bzw. der Abstand eines Anschlages für Magnete, insbesondere Permanentmagnete, in Bezug zur Dichtfläche bzw. zum Ventilsitz mit besonders hoher Genauigkeit eingestellt werden. Dieses Maß ist vor allem für die Anzugskraft des Ventilkörpers am Ventilsitz von hoher Relevanz.

Vorteilhafterweise ist wenigstens eine Anschlagsfläche zum Anschlagen einer Prägelehre, eines Permanentmagneten und/oder eines Abstandselementes zum Einstellen eines Hubes des Ventilkörpers vorgesehen, wobei in einer besonders vorteilhaften Weiterbildung dieser Ausführungsform lediglich eine Anschlagsfläche für mehrere oder alle vorgenannten Funktionen vorgesehen werden kann. Bei der zuletzt genannten Multifunktions-Variante der Anschlagsfläche gemäß der Erfindung reduziert sich der konstruktive Aufwand des Ventils, was wiederum zu einer besonders kostengünstigen Herstellung führt.

In einer vorteilhaften Ausführungsform der Erfindung umfasst das Ventilsitzelement eine Wand einer Ventilkammer. Vorzugsweise ist das Ventilsitzelement als Polschuh ausgebildet. Solche Maßnahmen können zu einer besonders einfachen bzw. konstruktiv wenig aufwendigen Realisierung des Ventils gemäß der Erfindung führen, was die Herstellungskosten weiter reduziert.

Vorteilhafterweise ist zwischen dem Ventilkörper und dem Dichtelement eine separate Dichtung aus nachgiebigem bzw. elastischem Material, z.B. eine Kunststoffdichtung, insbesondere eine Elastomer-, Teflondichtung oder dergleichen, angeordnet. Hierzu kann beispielsweise das Ventilsitzelement mit wenigstens einer Nut zum Aufnehmen der Dichtung versehen werden. Durch solche Maßnahmen kann die Dichtheit des Ventilsitzes zusätzlich erhöht werden, was zur Verbesserung der Betriebssicherheit des Ventils beiträgt.

Ein Ausführungsbeispiel der Erfindung ist in der Zeichnung dargestellt und wird anhand der Figuren nachfolgend näher erläutert.

Im Einzelnen zeigt:
- Figur 1: eine schematische, geschnittene Darstellung eines zu prägenden Ventilsitzes gemäß der Erfindung und
- Figur 2: eine schematische, geschnittene Darstellung eines geprägten Ventilsitzes gemäß der Erfindung.

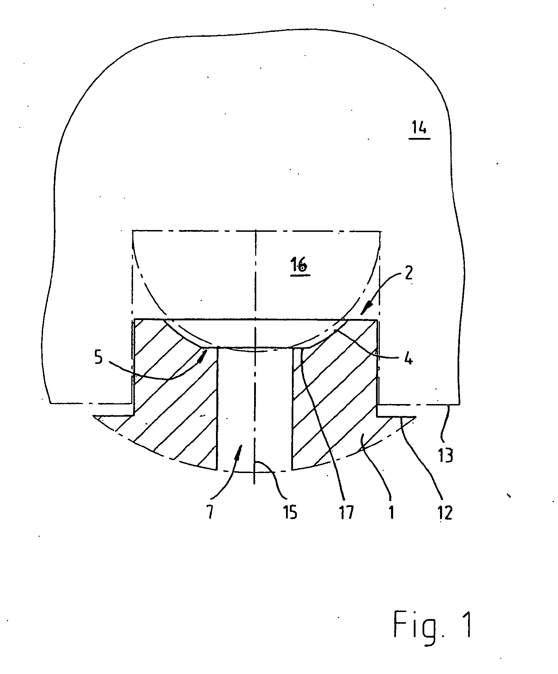

In Figur 1 ist schematisch ein Ausschnitt eines Polschuhs 1 mit einem Ventilsitz 2 und einem Prägelement 16 dargestellt. Hierbei ist der Zustand des Ventilsitzes 2 unmittelbar vor dem bzw. beim Prägevorgang abgebildet. Vor dem Prägen wurde eine Ausnehmung 4 des Polschuhs 1 bzw. Ventilsitzelementes 1 vorzugsweise mittels Drehverfahren erzeugt, wobei ein Überstand bzw. Ringsteg 5 generiert wurde, der eine Prägefläche 17 umfasst.

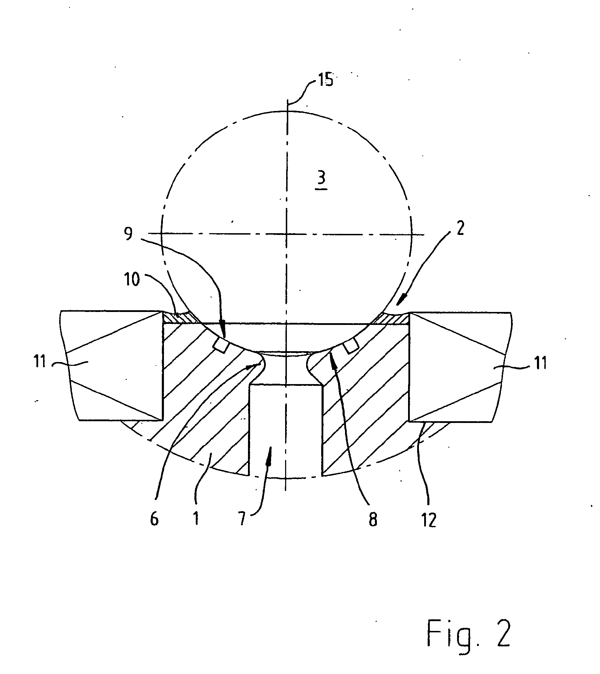

In Figur 2 ist schematisch der Ventilsitz 2 nach dem Prägevorgang dargestellt. Durch das Prägen wurde aus dem Überstand bzw. Ringsteg 5 eine Verformung 6 des Polschuhs 1 erzeugt. Gemäß dieser Figur wird deutlich, dass die Verformung 6 zu einer Verengung bzw. Ausbeulung einer Ventilbohrung 7 führt.

Weiterhin wurde durch das Prägen des Ventilsitzes 2 eine Dichtfläche 8 erzeugt. Diese Dichtfläche 8 bildet die Kontaktfläche zwischen dem Ventilkörper 3 und dem Polschuh 1. Durch das Prägen ist ein sphärischer Ring als Dichtfläche 8 gefertigt worden, die eine hohe Genauigkeit der sphärischen Form bezüglich der Kugelform des ventilkörpers 3 aufweist. Hierdurch ist die Ausnehmung 4 an die Form des Ventilkörpers 3 vorteilhaft angepasst, so dass ein besonders dichter Ventilsitz 2 für den Ventilkörper 3 erzeugt wird.

Weiterhin ist in Figur 2 ein optional vorsehbarer Einstich 9 des Polschuhs 1 dargestellt, der zur Aufnahme einer Dichtung, z.B. einer Elastomer-, Teflondichtung oder dergleichen ausgebildet ist. Zusätzlich ist eine Teflon- oder Elastomerdichtung 10 aufgeführt, die ebenfalls optional vorgesehen werden kann. Sowohl die Elastomerdichtung 10 als auch die nicht näher aufgeführte Dichtung, die in den Einstich 9 einlegbar und/oder einspritzbar ist, kann unter besonderen Bedingungen zur zusätzlichen Abdichtung des Ventilsitzes 2 vorgesehen werden.

Weiterhin ist der Figur 2 ein Magnet 11, insbesondere Ringmagnet 11 zu entnehmen. Dieser Magnet 11 ist am Polschuh 1 mit Hilfe eines Anschlags 12 genau lokalisiert. Durch die exakte Festlegung der Lage des Magneten 11 sowie der Dichtfläche 8 wird die durch diesen erzeugte Anziehungskraft für den Ventilkörper 3 festgelegt. Dies gewährleistet eine sichere Betriebsweise des Ventils.

Weiterhin wird in Figur 1 deutlich, dass der Anschlag 12 zusätzlich als Anschlag 12 für eine Prägelehre 14 bzw. deren Anschlag 13 ausgebildet ist. Beim Prägevorgang wird mit Hilfe der Prägelehre 14 eine hoch genaue Festlegung der Lage der Dichtfläche 8 in axialer Richtung 15 des Ventils bzw. in Richtung des Ventilhubs des Ventilkörpers 3 festgelegt.

Generell ist beim erfindungsgemäßen Herstellungsverfahren ganz besonders von Vorteil, dass die Ausnehmung 4 mit vergleichsweise geringer Genauigkeit unter anderem durch Drehverfahren herstellbar ist. Die hierbei vorhandenen Ungenauigkeiten des Drehens, sowohl im Hinblick auf die Form der Ausnehmung, als auch in Bezug zu den Außenmaßen des Polschuhs 1 bzw. dem Anschlag 12, etc. werden beim Prägen, insbesondere aufgrund der Prägelehre 14, in vorteilhafter Weise verringert bzw. beseitigt. Beispielsweise handelt es sich bei der Prägelehre 14 und/oder dem Prägeelement 16 um gehärtete Elemente, so dass gerade bei Serienfertigung entsprechender Ventilsitze 2 eine hohe Genauigkeit zahlreicher Ventile gemäß der Erfindung bei geringen Herstellungskosten verwirklicht werden kann.

Beispielsweise werden bei Ventilen gemäß der Erfindung zwischen zwei Polschuhen 1 ein Abstandselement gemäß der im Stand der Technik aufgeführten internationalen Patentanmeldung des Anmelders verwendet. Mittels diesem Abstandselement sind gerade in Kombination mit dem geprägten Ventilsitz 2 gemäß der vorliegenden Erfindung ein hochpräzises und somit auch dichtes Ventil auf einfache Weise kostengünstig herstellbar, so dass je nach Anwendungsfall sogar auf eine abschließende Prüfung bzw. Vermessung der Toleranzen einzelner Fertigungsschritte und/oder des fertig montierten Ventils verzichtet werden kann. Dementsprechend verringert sich der Gesamtaufwand zur Herstellung und Montage entsprechender Ventile gemäß der Erfindung.

Grundsätzlich kann die Prägelehre 14 durch vorteilhafte Bearbeitung des Anschlags 13, insbesondere durch Schleifen, Polieren, usw. mit sehr hoher Genauigkeit hergestellt werden. Entsprechendes trifft für ein oben erwähntes Abstandselement zwischen den Polschuhen 1 zu.

### Bezugszeichenliste:

- 1: Polschuh bzw. Ventilsitzelement
- 2: Ventilsitz
- 3: Ventilkörper
- 4: Ausnehmung
- 5: Ringsteg bzw. Überstand
- 6: Verformung
- 7: Bohrung
- 8: Dichtfläche
- 9: Einstich
- 10: Elastomer
- 11: Magnet
- 12: Anschlag
- 13: Anschlag
- 14: Lehre
- 15: Achse
- 16: Prägelement
- 17: Prägefläche

## Patentansprüche

1. Verfahren zum Herstellen eines Ventils insbesondere für Kühlmittelkreisläufe, wobei ein Ventilsitz (2) eines Ventilsitzelementes (1) oder eines Dichtelementes für einen Ventilkörper (3) erzeugt wird, wobei wenigstens eine Dichtfläche (8) des Ventilsitzelementes (1) oder des Dichtelementes mittels eines Prägeelementes (16) durch Prägen einer Prägefläche (17) geformt wird und wobei wenigstens ein zu prägender Überstand (5) des Ventilsitzelementes (1) oder des Dichtelementes erzeugt wird, **dadurch gekennzeichnet, dass** vor dem Prägevorgang wenigstens eine die Prägefläche (17) umfassende Ausnehmung (4) erzeugt wird, die wenigstens teilweise in der Form entsprechend des Ventilkörpers (3) ausgebildet wird.

2. Verfahren nach Anspruch 1, **dadurch gekennzeichnet, dass** ein Prägeelement (16) verwendet wird, dessen Form wenigstens teilweise der Form des Ventilkörpers (3) entspricht.

3. Verfahren nach einem der vorgenannten Ansprüche, **dadurch gekennzeichnet, dass** eine wenigstens teilweise sphärische Dichtfläche (8) geformt wird.

4. Verfahren nach einem der vorgenannten Ansprüche, **dadurch gekennzeichnet, dass** wenigstens teilweise unmittelbar in das Ventilsitzelement (2) die Dichtfläche (8) geformt wird.

5. Verfahren nach einem der vorgenannten Ansprüche, **dadurch gekennzeichnet, dass** die Ausnehmung (4) als eine durch Drehverfahren erzeugte Ausnehmung (4) des Ventilsitzelementes (1) ausgebildet wird.

6. Verfahren nach einem der vorgenannten Ansprüche, **dadurch gekennzeichnet, dass** der Überstand (5) als Ringsteg (5) ausgebildet wird.

7. Verfahren nach einem der vorgenannten Ansprüche, **dadurch gekennzeichnet, dass** die Ausnehmung (4) und/oder der Überstand (5) wenigstens teilweise mit formenden und/oder spanenden Verfahren gefertigt wird

8. Verfahren nach einem der vorgenannten Ansprüche, **dadurch gekennzeichnet, dass** eine Prägelehre (14) mit wenigstens einem Anschlag (13) zum Anschlagen am Dichtelement und/oder Ventilsitzelement (1) verwendet wird.

9. Verfahren nach dem vorgenannten Anspruch, **dadurch gekennzeichnet, dass** das Prägeelement (16) beim Prägen zwischen der Prägelehre (14) sowie dem Dichtelement und/oder dem Ventilsitzelement (1) angeordnet wird.

## Claims

1. A method for producing a valve in particular for coolant circuits, wherein a valve seat (2) of a valve seating element (1) or a sealing element for a valve body (3) is produced, wherein at least one sealing surface (8) of the valve seating element (1) or the sealing element is shaped by means of a stamping element (16) by stamping a stamping surface (17), and wherein at least one projection (5) to be stamped of the valve seating element (1) or of the sealing element is produced, **characterised in that** prior to the stamping process at least one recess (4) comprising the stamping surface (17) is produced, which is designed at least partly in a shape corresponding to the valve body (3).

2. The method according to claim 1, **characterised in that** a stamping element (16) is used, the shape of which corresponds at least partly to the shape of the valve body (3).

3. The method according to one of the preceding claims, **characterised in that** a sealing surface (8) is formed which is at least partly spherical.

4. The method according to one of the preceding claims, **characterised in that** the sealing surface (8) is formed at least partly directly in the valve seating element (2).

5. The method according to one of the preceding claims, **characterised in that** the recess (4) is designed as a recess (4) of the valve seating element (1) produced by a turning operation.

6. The method according to one of the preceding claims, **characterised in that** the projection (5) is designed as an annular web (5).

7. The method according to one of the preceding claims, **characterised in that** the recess (4) and/or the projection (5) are produced at least partly by means of a shaping and/or chipping process.

8. The method according to one of the preceding claims, **characterised in that** a stamping gauge (14) is used with at least one stop (13) for contacting the sealing element and/or valve seating element (1).

9. The method according to the preceding claim, **characterised in that** the stamping element (16) is arranged during stamping between the stamping gauge (14) and the sealing element and/or the valve seating element (1).

## Revendications

1. Procédé de fabrication d'une soupape, en particulier pour des circuits de fluides de refroidissement, dans lequel est produit un siège de soupape (2) d'un élément de siège de soupape (1) ou d'un élément d'étanchéité pour un corps de soupape (3), au moins une surface d'étanchéité (8) de l'élément de siège de soupape (1) ou de l'élément d'étanchéité étant formée au moyen d'un élément de matriçage (16) par matriçage d'une surface de matriçage (97), et au moins une saillie à matricer (5) de l'élément de siège de soupape (1) ou de l'élément d'étanchéité étant produite,
**caractérisé en ce que**, avant le processus de matriçage, il est produit au moins un évidement (4) comprenant la surface de matriçage (17), lequel est réalisé avec une forme correspondant au moins partiellement à celle du corps de soupape (3).

2. Procédé selon la revendication 1,
**caractérisé en ce qu'**on utilise un élément de matriçage (16) dont la forme correspond au moins partiellement à celle du corps de soupape (3).

3. Procédé selon l'une des revendications précédentes,
**caractérisé en ce qu'**il est formé une surface d'étanchéité (8) au moins partiellement sphérique.

4. Procédé selon l'une des revendications précédentes,
**caractérisé en ce que** la surface d'étanchéité (8) est formée au moins partiellement directement dans l'élément de siège de soupape (1).

5. Procédé selon l'une des revendications précédentes,
**caractérisé en ce que** l'évidement (4) est réalisé sous la forme d'un évidement (4) de l'élément de siège de soupape (1) produit par un procédé de tournage.

6. Procédé selon l'une des revendications précédentes,
**caractérisé en ce que** la saillie (5) est réalisée sous la forme d'une nervure annulaire (5).

7. Procédé selon l'une des revendications précédentes,
**caractérisé en ce que** l'évidement (4) et/ou la saillie (5) est produit(e) au moins partiellement par un procédé de formage et/ou d'usinage par enlèvement de copeaux.

8. Procédé selon l'une des revendications précédentes,
**caractérisé en ce qu'**on utilise un gabarit de matriçage (14) comportant au moins une butée (13) pour venir en butée sur l'élément d'étanchéité et/ou l'élément de siège de soupape (1).

9. Procédé selon la revendication précédente,
**caractérisé en ce que** l'élément de matriçage (16) est disposé, lors du matriçage, entre le gabarit de matriçage (14) et l'élément d'étanchéité et/ou l'élément de siège de soupape (1).
